(19) Europäisches Patentamt
European Patent Office
Office européen des brevets

(11) Veröffentlichungsnummer: **0 620 427 A2**

## (12) EUROPÄISCHE PATENTANMELDUNG

(21) Anmeldenummer: **94103766.5**

(51) Int. Cl.⁵: **G01M 3/32**

(22) Anmeldetag: **11.03.94**

(30) Priorität: **16.03.93 DE 4308324**

(43) Veröffentlichungstag der Anmeldung:
**19.10.94 Patentblatt 94/42**

(84) Benannte Vertragsstaaten:
**BE DE FR GB IT NL**

(71) Anmelder: **KHS Maschinen- und Anlagenbau Aktiengesellschaft**
**Klöcknerstrasse 29**
**D-47057 Duisburg (DE)**

(72) Erfinder: **Menze, Thomas**
**Bert-Brecht-Strasse 29**
**D-59427 Unna (DE)**
Erfinder: **Thatenhorst, Klaus**
**Chaussee 148**
**D-59439 Holzwickede (DE)**

(54) **Verfahren zur kontinuierlichen Inspektion von Kunststoffflaschen.**

(57) Bei einem Verfahren zur kontinuierlichen Inspektion von Kunststoffflaschen soll ein gegenüber dem Stand der Technik verbessertes System zur Bestimmung von Leckagen in Behältern geschaffen werden. Hierzu wird vorgeschlagen, daß nach gasdichtem Anliegen der Flaschenmündung innerhalb der Flasche ein Druck eingestellt und eine erste Messung des in der Flasche vorherrschenden Druckes mit entsprechender Speicherung und nach einer einstellbaren Zeitkonstanten mindestens eine zweite Messung erfolgt und dieser zweite Wert mit dem ersten Wert verglichen und bei Abweichung vom ersten Wert oberhalb einer einstellbaren Toleranz ein Signal zur Ausschleusung der Flasche gegeben wird.

EP 0 620 427 A2

Die Erfindung bezieht sich auf ein Verfahren zur kontinuierlichen Inspektion von Kunststoffflaschen, insbesondere zur Dichtigkeitskontrolle von wiederverwendbaren Flaschen in Inspektions- und Füllmaschinen, wobei zur Dichtigkeitskontrolle ein bestimmter Druck in der Flasche eingestellt und innerhalb eines Zeitabschnittes überwacht wird.

Es ist bekannt, nach dem Prinzip der Druckabfallmessung in einem Behälter dessen Dichtigkeit zu kontrollieren. Hierbei wird der Behälter über eine Einlaufschnecke und einem Einlaufstern dem Zentrierteller einer Inspektionsmaschine zugeführt, dort gegen die Dichtung des Füll- oder Meßkopfes gehoben und innerhalb einer gewissen Zeit mit Prüfluft, beispielsweise auf 0,8 bar, befüllt. Während des Füllens mißt das System den Innendruck. Im Gegensatz zu ebenfalls bekannten volumenabhängigen Steuerungen arbeitet die Ventilsteuerung druckabhängig, so daß thermodynamisch verursachte Druckschwankungen in den Behältern praktisch ausgeschlossen sind. Der Meßkopf führt zwischen Dosenaus- und Doseneinlauf einen Nullabgleich zum jeweils herrschenden Atmosphärendruck durch, so daß der Differenzdruck in der Prüfphase exakt auf beispielsweise 0,8 bar zwischen der Außen- und Innenseite des Behälters einstellbar ist. Diese Messung kann nur bei geringem Druckvolumen durchgeführt werden, weshalb im Prüfrotor während des Einlaufens der Behälter in diese Füllstücke eintauchen, die das betreffende Prüfvolumen erheblich reduzieren.

Andere Verfahren zur Überprüfung der Dichtigkeit von Kunststoffflaschen arbeiten nach dem Vakuumsystem. Baut sich bei dieser Messung der Unterdruck innerhalb einer bestimmten Zeit über die normale Toleranz hinaus ab, wird eine Beschädigung dieser Flasche vorausgesetzt und deren Ausschleusung eingeleitet.

Bei dem erstgenannten System ist als nachteilig anzusehen, daß zur Verminderung des tatsächlichen Volumens ein Füllkörper in den Behälter eingeführt werden muß, was zu erheblichen Verlustzeiten führt, die bei der ohnehin geringen Umlaufzeit solcher Behälter in vollautomatischen Inspektionsmaschinen als störend anzusehen ist.

Der Erfindung liegt die Aufgabe zugrunde, ein verbessertes und zuverlässiges Verfahren zur Bestimmung von Leckagen in Behältern, insbesondere wiederverwendbaren Kunststoffflaschen zu schaffen. Diese Aufgabe wird bei einem Verfahren der eingangs genannten Art dadurch gelöst, daß nach gasdichtem Anliegen der Flaschenmündung innerhalb der Flaschen ein Druck eingestellt und eine erste Messung des in der Flasche vorherrschenden Druckes mit entsprechender Speicherung und nach einer einstellbaren Zeitkonstanten mindestens eine zweite Messung erfolgt und dieser zweite Wert mit dem ersten Wert verglichen und bei Abweichung vom ersten Wert oberhalb einer einstellbaren Toleranz ein Signal zur Ausschleusung der Flasche erzeugt wird.

Weitere Merkmale der Erfindung ergeben sich aus den verbleibenden Unteransprüchen.

Die zur Durchführung des erfindungsgemäßen Verfahrens geeignete Vorrichtung, bestehend aus einer Inspektionseinrichtung und in deren Umlaufkreis angeordneten Prüfstationen, zeichnet sich dadurch aus, daß die Prüfstation aus einem zeitkonstant ansteuerbaren Magnetventil zur Druckeinstellung und einem Drucksensor und einer zugeordneten Mikrokontroller-Einheit gebildet ist, die nach Druckeinstellung ein oder mehrmals aktivierbar ist, wobei die gemessenen Daten speicherbar und vergleichbar sind.

Bei einem wegkonstantem System (zum Beispiel mit Drehschiebern oder dgl.), können bestimmte Werte durch die dynamische Maschinenleistung nicht eingehalten werden. Darum kann bei einem solchen System kein von der Maschinenleistung unabhängiger, konstanter Druck in dem jeweils zu prüfenden Behälter gewährleistet werden. Das bedeutet, daß die sehr feinen Druckabfälle in einer Flasche mit einem Loch von z. B. 0,5 mm über einen Bereich von ca. 0,5 - 5 bar gemessen werden müßten. In diesem großen Meßbereich ist die geforderte Genauigkeit von beispielsweise 1- 2 mbar nicht zu erreichen.

Mit dem erfindungsgemäßen zeitkonstanten System wird unabhängig von der Maschinenleistung durch die definierte Ventilöffnungszeit ein praktisch gleicher Druck in dem Behälter in der Größenordnung von 0,5 - 1 bar erzielt. In diesem eingegrenzten Bereich sind besonders exakt messende Druckaufnehmer einsetzbar. Als Druckaufnehmer dient ein Silizium-Dünnschicht-DMS, der auf einem Saphir aufgebracht ist. Diese Anordnung ermöglicht eine sehr schnelle und genaue Messung des Druckverlaufes im System.

Durch den Druckabfall im System ergibt sich im allgemeinen eine Differenz zwischen der ersten und der zweiten Messung, wobei die größere Differenz auf eine undichte Flasche schließen läßt. Diese Meldung wird dem Schieberegister der Maschine übergeben, worauf die als beschädigt erkannte Flasche anschließend durch einen Vakuumstern oder dgl. aussortiert wird.

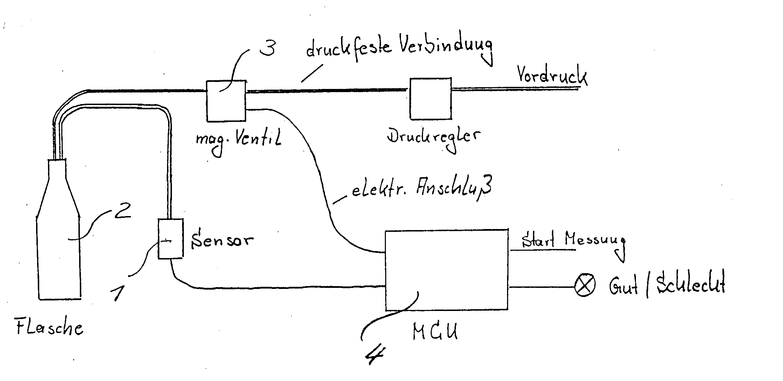

Gemäß dem in der Zeichnung dargestellten Ausführungsbeispiel wird als Sensor ein Drucksensor 1 eingesetzt, der beispielsweise nach dem DMS-Prinzip arbeitet. Dieser gibt die Druckverhältnisse in der Flasche 2 wieder. Die Flaschen werden zeitkonstant, gesteuert durch ein Magnetventil 3, befüllt. Die Füllzeiten sind als Funktion des betreffenden Flaschenvolumens realisiert und einstellbar. Damit wird erreicht, daß sich für jede Flaschensorte der gleiche Druck in der Flasche 2 nach der Befüllung einstellt.

Diese Steuerung ist auch in der betreffenden Mikrokontroller-Einheit realisiert. Dabei können praktisch folgende Zeiten programmiert werden, die sich als besonders günstig herausgestellt haben:

```
0,5  l Flasche = Ventilöffnungszeit  25 ms
0,75 l    "    =        "            50 ms
1,5  l    "    =        "            75 ms
2,0  l    "    =        "           100 ms
```

Nach dem Schließen des Magnetventils 3 wird eine konstante Zeit gewartet, damit sich die Druckverhältnisse in der Flasche 2 beruhigen. Anschließend wird nach weiteren beispielsweise 50 ms nach dem Schließen des Magnetventils 3 das erstemal der Flaschendruck durch die Mikrokontroller-Einheit bestimmt und gespeichert. Dieses Messung ist keine Einzelmessung, sondern wird aus mehreren Meßwerten mit Mittelwertmessung bestimmt.

Danach werden weitere beispielsweise 350 ms gewartet, worauf der Flascheninnendruck erneut gemessen wird. Von dem ersten Meßwert wird der zweite Meßwert subtrahiert. Die Differenz der beiden Meßwerte ist direkt proportional zu der betreffenden Flaschenundichtigkeit. Die Gesamtzeit vom Öffnen des Ventils bis zur zweiten Meßwertaufnahme beträgt beispielsweise 500 ms.

Während des Arbeitsverfahrens ist es möglich, für die Mikrokontroller-Einheit 4 die Flaschensorte zu ändern. Weiterhin ist es während des Betriebes möglich, die Sensoreinheit 1 neu zu kalibrieren. Dies ist erforderlich, wenn der Meßaufbau während des Betriebes im Laufe der Zeit undichter wird z. B. durch nachlassende Abdichtungen und dgl. Dazu wird der Sensor 1 auf Kalibrieren geschaltet und eine dichte Flasche 2 gemessen. Die Mikrokontroller-Einheit ermittelt dann die Druckdifferenz für dieses System und findet selbständig die entsprechende Grenze für eine undichte Flasche. Während der Überwachungsphase werden dann die neuen Standardwerte geladen.

**Patentansprüche**

1. Verfahren zur kontinuierlichen Inspektion von Kunststoffflaschen, insbesondere zur Dichtigkeitskontrolle von wiederverwendbaren Flaschen in Inspektions- und Füllmaschinen, wobei zur Dichtigkeitskontrolle ein bestimmter Druck in der Flasche eingestellt und innerhalb eines Zeitabschnittes überwacht wird, **dadurch gekennzeichnet,** daß nach gasdichtem Anliegen der Flaschenmündung innerhalb der Flasche (2) ein Druck eingestellt und eine erste Messung des in der Flasche (2) vorherrschenden Druckes mit entsprechender Speicherung und nach einer einstellbaren Zeitkonstanten mindestens eine zweite Messung erfolgt und dieser zweite Wert mit dem ersten Wert verglichen und bei Abweichung vom ersten Wert oberhalb einer einstellbaren Toleranz ein Signal zur Ausschleusung der Flasche (2) gegeben wird.

2. Verfahren nach Anspruch 1, **dadurch gekennzeichnet,** daß die variable Zeitkonstante in Abhängigkeit von der Maschinendurchsatzleistung und Flaschensorte einstellbar ist.

3. Verfahren nach Anspruch 1, **dadurch gekennzeichnet,** daß der Überwachungseinheit von einer zentralen Triggerung ein Startsignal und ein flaschenabhängiges Signal sowie eine Information über die jeweilige Maschinenleistung zugegeben und in Abhängigkeit von diesen Signalen die Ventilöffnungszeit zur Beaufschlagung der Flasche (2) gesteuert wird.

4. Verfahren nach Anspruch 1, **dadurch gekennzeichnet,** daß die zweite Messung in Abhängigkeit von der Maschinendurchsatzleistung einleitbar ist.

5. Verfahren nach Anspruch 1, **dadurch gekennzeichnet,** daß die Sensoreinheit kalibrierbar und durch Messen einer Gutflasche auf die sich veränderten Betriebsbedingungen einstellbar ist.

6. Vorrichtung zur Durchführung des Verfahrens nach den Ansprüchen 1 - 4, bestehend aus einer Inspektionseinrichtung und in deren Umlaufkreis angeordneten Prüfstationen, **dadurch gekennzeichnet,** daß die Prüfstation aus einem zeitkonstant ansteuerbaren Magnetventil (3) zur Druckeinstellung und einem Drucksensor (1) und einer zugeordneten Mikrokontroller-Einheit (4) gebildet ist, die nach Druckeinstellung ein oder mehrmals aktivierbar ist, wobei die gemessenen Daten speicherbar und vergleichbar sind.